(19) Europäisches Patentamt
European Patent Office
Office européen des brevets

(11) **EP 2 194 409 A1**

(12) **EUROPÄISCHE PATENTANMELDUNG**

(43) Veröffentlichungstag:
**09.06.2010  Patentblatt 2010/23**

(51) Int Cl.:
**G02B 21/00** *(2006.01)*    **G01B 9/02** *(2006.01)*
**G01B 11/16** *(2006.01)*

(21) Anmeldenummer: **08171002.2**

(22) Anmeldetag: **08.12.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder: **Technische Fachhochschule Wildau
15745 Wildau (DE)**

(72) Erfinder: **Foitzik, Andreas
13125 Berlin (DE)**

(74) Vertreter: **Schubert, Klemens
Neue Promenade 5
10178 Berlin-Mitte (DE)**

(54) **Mikroskop und Verfahren zur Bewegungs-, Form- und/oder Deformationsmessung von Objekten**

(57)    Mikroskop mit einem Tubus, bei dem mindestens ein Bauteil eines Speckle-Interfereometers teilweise oder vollständig in den Tubus integriert ist, wodurch der Referenzstrahl und der Objektstrahl des Speckle-Interferometers durch die Optik des Mikroskops leitbar sind. Ferner betrifft die Erfindung ein Verfahren zur Bewegungsmessung, Formmessung und/oder Deformationsmessung von Objekten, für Vitalitätstests von Zellen oder zur Krebsdiagnostik mittels eines Mikroskops nach einem der vorhergehenden Ansprüche.

Fig. 1

**Beschreibung**

Die Erfindung betrifft ein Mikroskop mit einem Tubus und ein Verfahren zur Bewegungsmessung, Formmessung und/oder Deformationsmessung von Objekten, für Vitalitätstests von Zellen oder zur Krebsdiagnostik mittels eines Mikroskops sowie die Verwendung des Mikroskops.

Ein Speckle (Granulation) ist eine Vielstrahlinterferenzerscheinung hervorgerufen durch Wellen, die von vielen kohärenten aber stochastisch verteilten Lichtquellen herrühren. Betrachtet man eine optisch raue Oberfläche, die mit kohärentem Licht (zum Beispiel mit einem Laser) beleuchtet wird, so beobachtet man eine Granulation der beleuchteten Oberfläche, ein so genanntes Speckle-Muster (abgeleitet vom englischen Wort: "speckle", deutsch: "Flecken"), bestehend aus scheinbar hellen und dunklen Stellen statt einer homogenen Ausleuchtung des Objekts. Bewegt sich das Objekt, die Beleuchtungsquelle oder der Betrachter, scheint diese Granulation zu "flirren", während beim unbewegten System Beleuchtung-Objekt-Betrachter ein zeitlich konstantes Speckle-Muster beobachtet wird.

Speckles entstehen durch die Superposition kohärenter elektromagnetischer Wellen. Durch gestreute Lichtwellen kommt es an verschiedenen Stellen im Raum zu destruktiver und konstruktiver Interferenz. Speckles gibt es im gesamten elektromagnetischen Spektrum, nicht nur bei sichtbarem Licht.

Alternativ zum experimentell nicht zugänglichen Speckle-Muster im Raum lässt sich ein zweidimensionaler Ausschnitt des Speckle-Musters auf einem Schirm, einem Foto beziehungsweise heutzutage mit einem CCD-Sensor (CCD: Charge-coupled Device) einer Kamera zu Auswertungszwecken heranziehen. Jede einzelne helle oder dunkle Stelle ist ein Speckle. Erst die Falschfarbendarstellung enthüllt, dass es dabei nicht nur rein helle oder rein dunkle Stellen gibt, sondern einen kontinuierlichen (mathematisch: stetigen) Übergang zwischen hellen und dunklen Maxima.

Ein einzelnes Speckle-Muster (auf einem Schirm, einem Foto oder auf einem CCD-Sensor) hat durch die messtechnische Erfassung des nur zweidimensionalen Ausschnitts des eigentlich dreidimensionalen Speckle-Musters im Raum nur wenig Aussagekraft. Stattdessen werden bei der Speckle-Interferometrie zwei nacheinander aufgenommene Speckle-Muster des Messobjekts (z.B. vor und nach einer Verformung des Untersuchungsobjekts) voneinander subtrahiert und es entsteht als Resultat ein Interferogram. Dieses ermöglicht die Analyse von Verformungen, Verschiebungen und selbst Schwingungsanalysen, und man spricht von "Elektronischer Speckle Pattern Interferometrie (ESPI)", im englischsprachigen Raum auch "Digital Speckle Pattern Interferometry" genannt.

Aufgabe der vorliegenden Erfindung ist es, das Verfahren der Speckle-Interferometrie für die Messung von sehr kleinen Objekten und Objekten mit glatter Oberfläche nutzbar zu machen.

Die Aufgabe wird durch ein Mikroskop gelöst, bei dem mindestens ein Bauteil eines Speckle-Interferometers teilweise oder vollständig in den Tubus integriert ist, wodurch der Referenzstrahl und der Objektstrahl des Speckle-Interferometers durch die Optik des Mikroskops leitbar sind. Eine solche Anordnung ermöglicht es, dass selbst kleinste Objekte vermessen werden können. Die Auflösung wird dabei durch das verwendete Objektiv des Mikroskops bestimmt. Die durch das erfindungsgemäße Mikroskop erzielbare höhere Auflösung ermöglicht es, selbst glatte Flächen zu messen, die der Speckle-Interferometrie bisher nicht zugänglich gewesen sind.

Das Speckle-Interferometer besteht vorzugsweise aus einem oder mehreren Lasern, einem oder mehreren Strahlenteilern, einem Piezospiegel und einem lichtempfindlichen Sensor oder einer Projektionsfläche.

Ein lichtempfindlicher Sensor im Sinne der Erfindung ist ein Sensor, der in der Lage ist, Strahlung im Bereich des sichtbaren Lichts, des IR- und UV-Spektrums bis hin zur Röntgenstrahlung zu detektieren. Als lichtempfindlicher Sensor dient beispielsweise ein CCD-Sensor oder ein CMOS-Sensor (CMOS = Complementary Metal Oxide Semiconductor, komplementärer Metall-Oxid-Halbleiter).

Als weitere Bestandteile können in dem Strahlengang des Speckle-Interferometers Strahlaufweiterlinsen oder Strahlaufweiterspiegel angeordnet sein.

Zudem kann mit Intensitäts-Filtern sichergestellt werden, dass die Intensität von Objekt- und Referenzstrahl gleich ist, da diese von Probe zu Probe unterschiedlich ist.

Für dynamische Untersuchungen (z.B. von Schwingungen) kann ein optoakustischer Modulator (AOM) enthalten sein.

Für die Einkopplung des Referenzstrahls kann bei ESPI-Anlagen ein Glasfaserkabel verwendet werden. In diesem Fall wird der Referenzstrahl nach dem Piezospiegel nicht mehr über Spiegel geführt, sondern mittels einer Optik in eine Glasfaser eingekoppelt, die dann unmittelbar vor der Linse der Kamera wieder in den Strahlengang gebracht wird. Bessere Ergebnisse werden jedoch durch die Verwendung von Spiegeln erzielt.

Eine Verkürzung der Abstände zwischen den Bauteilen und damit der Strecken, die die Strahlen zurücklegen, führt zu einer wesentlich kompakteren Bauweise des erfindungsgemäßen Mikroskops. Dies ist wünschenswert und für industrielle Zwecke auch anzustreben.

Durch eine sehr starke Verkürzung der Geometrie wird der Einsatz von Laserdioden anstatt von Lasern ermöglicht, die im Vergleich zu Lasern preiswerter sind. Ohne eine Verkürzung der Abstände ist der Einsatz von Laserdioden derzeit nicht möglich, da Laserdioden eine zu kurze Kohärenzlänge aufweisen.

Der Tubus weist an seinem unteren Ende vorzugsweise ein Objektiv und an seinem oberen Ende ein Okular oder den lichtempfindlichen Sensor auf. Das Objektiv ist dabei auf das zu betrachten Objekt gerichtet, dass auf dem Mikroskoptisch positioniert wird. Je nach Art des zu untersuchenden Objekts können dabei unterschiedliche Objektive eingesetzt werden.

Ein Mikroskoptisch im Sinne der Erfindung kann ein konventioneller Mikroskoptisch sein, aber auch jede andere Vorrichtung, wie zum Beispiel ein Probenhalter oder eine Probenbefestigungseinrichtung, die zur Positionierung eines Objekts verwendet werden kann.

Abhängig von der Art, wie der Referenz- und der Objektstrahl in den Tubus des Mikroskops geführt werden, kann das obere Ende des Tubusses als Okular oder als lichtempfindlicher Sensor ausgebildet sein. Eine Ausführungsform bei der das obere Ende des Tubusses ein Okular enthält, ermöglicht es, die Strahlen durch das Okular in den Tubus zu leiten. Werden die Laserstrahlen seitlich in den Tubus geleitet, kann anstatt eines Okulars direkt der lichtempfindliche Sensor am oberen Ende des Tubusses angeordnet sein.

Denkbar sind auch Ausführungsformen des Mikroskops, die zwei oder mehrere Tubusse aufweisen. Dabei kann einer der Tubusse wie ein herkömmlicher Tubus eines Mikroskops aufgebaut sein und der Beobachtung des Objekts dienen und der andere Tubus dient dazu die Speckle-Muster zu betrachten.

Der lichtempfindliche Sensor, beispielsweise ein CCD-Sensor oder ein CMOS-Sensor, ist vorzugsweise in einer digitalen Kamera integriert. Geeignete Kameras sind CCD-Kameras, Slow-scan CCD-Kameras, infrarotempfindliche Kameras (Wärmebildkameras) oder UV-empfindliche Kameras.

Der lichtempfindliche Sensor ist vorzugsweise mit einer Auswertungseinheit verbunden. Eine Auswertungseinheit im Sinne der Erfindung ist ein Rechner mit einer Software zur Auswertung von Speckle-Interferometerdaten.

Für die Integration des Speckle-Interferometers in das Mikroskop bestehen verschiedene Variationsmöglichkeiten.

Das Mikroskop kann derart aufgebaut sein, dass der Referenzstrahl und der Objektstrahl direkt in den Tubus des Mikroskops geleitet werden. Auch sind Varianten denkbar, bei denen das Mikroskop einen Tubus besitzt in den der Referenzstrahl eingeleitet wird und einen weiteren Tubus in den der Objektstrahl eingeleitet wird.

Mindestens ein Bauteil eines Speckle-Interferometers ist vollständig in den Tubus des erfindungsgemäßen Mikroskops integriert. Dies ist der Fall bei experimentellen Aufbauten, bei denen ein leichtes Auswechseln der einzelnen Komponenten des Speckle-Interferometer-Aufbaus von Vorteil ist.

Es sind aber auch Ausführungsformen denkbar, bei denen mehrere oder alle Elemente eines Speckle-Interferometers in das erfindungsgemäße Mikroskop eingebaut sind.

Des Weiteren kann man eine Zusatzvorrichtung an einem Lichtmikroskop befestigen, die ein Einleiten der Strahlen in den Tubus des Lichtmikroskops ermöglicht, so dass herkömmliche Lichtmikroskope mit einem Speckle-Interferometer verbindbar sind. Dies kann auch durch einen Adapter, mit dem man das erfindungsgemäße Mikroskop mit einem Lichtmikroskop verbindet, oder durch einen Austausch des Tubusses des Lichtmikroskops geschehen.

Bevorzugt sind in dem Tubus des erfindungsgemäßen Mikroskops ein oder zwei Strahlenteiler angeordnet. Der Referenzstrahl und der Objektstrahl treffen in dem Tubus auf jeweils einen der Strahlenteiler. Der Referenzstrahl wird durch den Strahlenteiler in Richtung des oberen Endes des Tubusses und der Objektstrahl wird in Richtung auf das Objekt umgelenkt. Der Objektstrahl wird vom Objekt reflektiert und verläuft durch beide Strahlenteiler hindurch in Richtung des oberen Endes des Tubusses. Die Strahlenteiler sind dabei übereinander angeordnet. Es ist jedoch auch denkbar, die Strahlenteiler nebeneinander oder seitlich versetzt anzuordnen.

Ferner ist eine Ausführungsform des erfindungsgemäßen Mikroskops denkbar, bei der in dem Tubus nur ein Strahlenteiler angeordnet ist, auf den der Objektstahl trifft. Dies ist dann der Fall, wenn man den Referenzstrahl direkt durch eine Glasfaser zum lichtempfindlichen Sensor führt.

Die Strahlenteiler im Tubus des erfindungsgemäßen Mikroskops sind Strahlenteilerwürfel oder halbdurchlässige Spiegel oder Prismen.

Damit die Laserstrahlen in den Tubus eingestrahlt werden können, weist der Tubus vorzugsweise zwischen Okular und Objektiv mindestens eine Öffnung zur Aufnahme des Referenzstrahls und des Objektstrahls auf. Die Öffnungen können Löcher in der Tubuswand sein oder durch transparente Scheiben aus Glas oder Kunststoff abgeschlossen sein.

Denkbar sind auch Ausführungsformen, bei denn der Referenz- und/oder der Objektstrahl mit Glasfaserkabeln in den Tubus geleitet werden. Bei dieser Ausführungsform sind die Öffnungen Anschlüsse für die Glasfaserkabel.

In einer weiteren bevorzugten Ausführungsform der Erfindung weist der Tubus zwischen Okular und Objektiv mindestens eine Öffnung zur Aufnahme des Objektstrahls auf und der Referenzstrahl ist über eine Glasfaser zum lichtempfindlichen Sensor leitbar.

Ferner sind alternativ zu Löchern auch Unterbrechungen im Tubusverlauf für die Einleitung von Referenz- und/oder Objektstrahl denkbar, dies können offene Bereiche im Tubus sein oder der Einsatz weiterer Tubusstücke - auch aus anderen Materialien.

Ferner ist eine Ausführungsform des Mikroskops denkbar, bei der ein Tubus mit einem Strahlenteiler zur Einleitung des Referenzstrahls und einem weiteren Tubus, ebenfalls mit einem Strahlenteiler, zur Einleitung des Objektstrahls dient. Bei einer solchen Ausführungsform würde die Vereinigung des Referenzstrahls mit dem vom Objekt reflektierten Objektstrahl außerhalb des Tubusses erfolgen.

Ein Mikroskop im Sinne der Erfindung ist daher lediglich eine Vorrichtung mit einem Tubus, wobei der Tubus ein Behälter mit den oben aufgeführten Merkmalen sein kann. Außerdem kann das Mikroskop einen Mikroskoptisch zur Aufnahme des zu untersuchenden Objekts aufweisen.

Des Weiteren besitzt das Mikroskop eine Mechanik mit der man den Abstand zwischen Objektiv und Objekt einstellt.

Der Laser emittiert Laserstrahlen im Wellenlängenbereich des sichtbaren Lichts und/oder im IR- und/ oder UV-Spektralbereich bis hin zur Röntgenstrahlung. Der Laser arbeitet dabei als Dauerstrich-Laser (continuous-wave laser, CW-Laser) oder als gepulster Laser. Die im Folgenden exemplarisch aufgeführten Laser kann man mit dem erfindungsgemäßen Mikroskop verwenden:

Gaslaser

Helium-Neon-Laser (HeNe-Laser, rot)
Kohlendioxidlaser ($CO_2$-Laser): (mittleres Infrarot)
Kohlenmonoxidlaser (CO-Laser) mittleres Infrarot
Stickstofflaser ($N_2$-Laser): 337,1 nm (ultraviolett)
Argon-Ionen-Laser, mehrere Linien bei 457,9 nm (8 %), 476,5 nm (12 %), 488,0 nm (20 %), 496,5 nm (12 %), 501,7 nm (5 %), 514,5 nm (43 %) (blau bis grün)
Helium-Cadmium-Laser (HeCd-Laser): wichtigste Laserquelle für blau (442 nm) und nahes UV (325 nm) Krypton-Ionen-Laser, mehrere Linien bei 350,7 nm; 356,4 nm; 476,2 nm; 482,5 nm; 520,6 nm; 530,9 nm; 586,2 nm; 647,1 nm (stärkste Linie); 676,4 nm; 752,5 nm; 799,3 nm (blau bis tiefrot)
Sauerstoff-Ionen-Laser
Xenon-Ionen-Laser
Mischgas-Laser
Excimerlaser, z.B. KrF (248 nm), XeF (351-353 nm),
ArF (193 nm), XeCl (308 nm), F2 (157 nm) (alles ultraviolett)
Metalldampflaser, z.B. Kupferdampflaser, bei 510,6 und 578,2 nm
Metallhalogenid-Laser, z.B. Kupferbromid-Laser, bei 510,6 und 578,2 nm
HCl-Laser
Iod-Laser

Farbstofflaser
Beispiele für Farbstoffe:

- Stilbene - Klasse von Farbstoffen im blauen Spektralbereich
- Cumarine - Klasse von Farbstoffen im blauen bis grün-gelben Spektralbereich
- Rhodamine - Klasse von Farbstoffen im gelben bis orange-roten Spektralbereich
- DCM - roter Farbstoff
- LDS - Klasse von Farbstoffen im IR-Bereich

Festkörperlaser

Glas
$Al_2O_3$ (Korund, Saphir) (z.B. Rubinlaser (Chrom-Dotierung), Titan:Saphir-Laser)
YAG (Yttrium-Aluminium-Granat-Laser), Dotierung mit Nd, Er, Yb, z.B. Nd:YAG-Laser
Yttrium-Vanadat ($YVO_4$), Dotierung Nd
Fluoride wie YLF, BYF oder KYF
Sesquioxide wie $SC_2O_3$ und $Lu_2O_3$
Nd:Glas
Nd:YLF
Yb:YAG-Laser, 1030 nm, auch frequenzverdoppelt, Titan:Saphir-Laser, 670-1100 nm (rot-infrarot), Erbium dotierte Laser, Wellenlänge 3 $\mu$m, Pumpen mit Diodenlasern bei 980 nm, so genannte augensichere Laser, Verwendung für Laser-Entfernungsmesser und in der Medizin Praseodym dotierte Laser, mehrerer Übergänge im sichtbaren Spektralbereich (444 nm (blau), 480 nm (blau), 523 nm (grün), 605 nm (orange) und 640 nm (rot)

Farbzentrenlaser

- Lithium-Fehlstellen in Lithiumfluorid
- Fehlstellen in Natriumchlorid
- weitere Kombinationen, z.B. KCl:Li KCl:Na, Rb-Cl:Li

Halbleiterlaser

- Laserdioden
- Optisch gepumpte Halbleiterlaser, auch Halbleiter-Scheibenlaser
- Quantenkaskadenlaser
- Oberflächenemittierende Laser (VCSEL) (sowohl optisch als auch elektrisch gepumpt)
- Abstimmbarer Laser (Tunable Laser Source, TLS) mit veränderbarer Wellenlänge

Freie-Elektronen-Laser (FEL)

Der Freie-Elektronen-Laser ist eine Synchrotronstrahlungsquelle, die gerichtete Strahlung (verschiedenste Wellenlängen von Mikrowellen bis in den Röntgenbereich, sehr hohe Brillanz) aus der Energie eines Elektronenstrahles erzeugt. Aufgrund der Kohärenz (meistens nur örtliche Kohärenz) der Strahlung wird der FEL als Laser bezeichnet.

Die optischen Linsen im erfindungsgemäßen Mikroskop, d.h. im ganzen Strahlengang, bestehen aus konventionellen Linsenmaterialien oder aus alternativen Materialien, um eine Mikroskopie alternativ oder zusätzlich im UV-und/oder IR-Spektralbereich zu ermöglichen. Konventionelle Linsenmaterialien bestehen vielfach aus Glas und damit im Wesentlichen aus amorphem Siliziumoxid ($SiO_2$).

Bei einer Verwendung von UV- und/oder IR-Lasern bestehen die optischen Linsen in dem Mikroskop vorzugsweise aus einem Material, das ausgewählt ist aus der Gruppe bestehend aus Quarzglas (wie z.B. Suprasil®), Magnesiumfluorid, Calciumfluorid, Kaliumbromid, Siliziumverbindungen, Germaniumverbindungen, Zinkselenid, Kalknatronglas (wie z.B. B270), Borsilikatglas (wie z.B. BK7, Pyrex®, Duran®-Glas), Magnesiumoxid, Calciumoxid, Strontiumoxid, Bariumoxid, kristalline Spinelle (wie z.B. $MgAl_2O_4$), YAG ($Y_3Al_5O_{12}$), Silikatmineralien (wie z.B. $Mg_3Al_2Ge_3O_{12}$, $Mg_3Lu_2Ge_3O_{12}$, $Mg_3Y_2Ge_3O_{12}$, $(CaY_2)\,Mg_2Ge_3O_{12}$), CVD-Diamant, AM-TIR. Es können aber auch anderen dem Fachmann bekannten Linsenmaterialien verwendet werden, die eine hohe Transmission für Strahlung im UV- und/oder IR-Spektralbereich aufweisen. Wobei Linsen aus MgO, CaO, SrO und BaO sowie die Silikatmineralien besonders bei der Verwendung von UV-Lasern geeignet sind.

In einer weiteren bevorzugten Ausführungsform der Erfindung ist der Strahlengang des erfindungsgemäßen Speckle-Interferometers mittels Spiegeln derart umleitbar, dass mindestens ein weiterer Laser als Strahlenquelle verwendbar ist. Eine solche Anordnung hat den Vorteil, dass man schnell zwischen zwei oder mehreren unterschiedlichen Strahlenquellen wechselt kann.

Des Weiteren wird die Aufgabe der vorliegenden Erfindung durch ein Verfahren gelöst, bei dem man mittels eines Lasers einen Laserstrahl erzeugt, den ein Strahlenteiler in einen Referenzstrahl und einen Objektstrahl aufteilt,

wobei der Objektstrahl durch die Optik eines Mikroskops ein zu untersuchendes Objekt beleuchtet und

man den Referenzstrahl in den Tubus des Mikroskops einspiegelt und von dort in Richtung eines lichtempfindlichen Sensors leitet oder durch eine Glasfaser direkt zum lichtempfindlichen Sensor leitet,

wobei sich Objektstrahl und Referenzstrahl auf dem Weg in Richtung des oberen Endes des Tubusses oder danach überlagern und auf den lichtempfindlichen Sensor treffen.

Bevorzugt erzeugt man mittels des lichtempfindlichen Sensors mehrere Aufnahmen des Speckle-Musters des Objekts.

Die Daten der Aufnahmen leitet man vorzugsweise an eine Auswertungseinheit weiter, wobei man die Daten in der Auswertungseinheit (beispielsweise einem Rechner) speichert und mittels einer Software auswertet.

Als Software kann beispielsweise FRAMESplus (Hersteller: Steinbichler®, Version 6.1), ISTRA for Windows® (Hersteller: Dantec Dynamics® GmbH, Ulm), Koala Software (Hersteller: Lyncée Tec® SA) oder ähnliche Programme verwendet werden.

Die Software ermöglicht es, die gespeicherten Daten (elektronischen Signale der Aufnahmen) mit Signalen von Folgezuständen subtraktiv oder multiplikativ zu überlagern. Aus den so gewonnenen Daten können Rückschlüsse auf eine Bewegung oder Verformung des Objektes getroffen werden.

Bei einigen Messungen ist es von Vorteil, den verwendeten Laser schnell wechseln zu können.

In einer bevorzugten Ausführungsform der Erfindung wechselt man durch Veränderung der Position von einem oder mehreren Spiegeln im Strahlengang den Laser, der den Laserstrahl erzeugt oder schaltet durch Veränderung der Position von einem oder mehreren Spiegeln im Strahlengang von einer Hellfeldbeleuchtung zu einer Dunkelfeldbeleuchtung um. Bei einer solchen Ausführungsform können die Laserstrahlen durch Spiegel umgelenkt werden, um Laser unterschiedlicher Art und Leistungen in den Strahlungsgang zu schalten. Außerdem kann die Richtung, aus der der Laserstrahl in den Tubus geleitet wird, verändert werden. Dies ist insbesondere bei einem Wechsel von der Hellfeldzur Dunkelfeldmessung vorteilhaft.

Des Weiteren wird die Aufgabe der vorliegenden Erfindung durch eine Verwendung des erfindungsgemäßen Mikroskops zur Werkstoffprüfung, Schichtdickenmessung, Bewegungsmessung, Formmessung und/oder Deformationsmessung von Objekten, für Vitalitätstests von Zellen oder zur Krebsdiagnostik gelöst.

Weitere Anwendungsgebiete des erfindungsgemäßen Mikroskops beziehungsweise des erfindungsgemäßen Verfahrens sind die folgenden Anwendungen:

Bestimmung von Eigenfrequenzen und Schwingungsformen für anorganische Bauteile

- Von makro- und mesoskopischen Proben, im Mikroskop lateral hoch aufgelöst, auch bei hohen und höchsten Frequenzen (bis MHz) und kleinen Amplituden
- Von mikrostrukturierten Bauteilen (eventuell "großen" Bauteilen mit darin eingebrachten kleinen Strukturen)
- Von Mikrobauteilen (Bauteile kleiner und kleinster Dimension);

Stofftransportphänomene in biologischen Zellen, nachgewiesen zunächst durch Fluoreszenz, bei gleichzeitiger Anlagerung der Stoffe oder bei gleichzeitiger mechanischer Reaktion der Zelle oder von Zellbestandteilen;

Charakterisierung des Cytoskeletts von biologischen Zellen;

Charakterisierung von kleinen und kleinsten Details biologischer Lebewesen (z.B. "Hörorgan" von Insekten, Hochfrequenzschwingungen von Antennen von Insekten);

Charakterisierung zyklischer Deformationsprozesse (mikro)biologischer Lebewesen (Puls, Herzschlag, Membranendeformation);

Charakterisierung transienter (vorübergehender) Deformationsprozesse (mikro)biologischer Lebewesen;

Charakterisierung von "molecular imprinted polymers" (multifunktionell geprägte Polymere), z.B. Korrelation der Befüllung von Kavitäten mit elektrischen Signalen von Feldeffekttransistoren;

Anlagerung und/oder Anwachsen biologischer Zellen an Oberflächen;

Toxizitätstests an einzelnen Zellen einschließlich des zeitlichen Verlaufs;

Krankheitsverlauf geschädigter oder erkrankter Zellen einschließlich des zeitlichen Verlaufs, z.B. Deformation von Blutzellen beim Befall mit dem Malaria-Virus;

Statische und Dynamische Charakterisierung des Wachstums von Longmuir-Blodgett Filmen;

Statische und Dynamische Charakterisierung des Wachstums von Multischichten auf Elektroden von Biosensoren;

Wachstum und Eigenschaften von Biopolymeren, Anwendung in der Implantologie;

Charakterisierung kryptobiotischer Lebensformen (Bärtierchen, Rose von Jericho);

Mikromechanik der Camouflage.

Im Folgenden wird die Erfindung anhand von Figuren und Beispielen näher beschrieben. Im Einzelnen zeigt

Figur 1          eine schematische Darstellung des Aufbaus eines erfindungsgemäßen Mikro- skops und des darin integrierten Speckle-Interferometers,

Figur 2          eine schematische Darstellung des Aufbaus eines Speckle-Interferometers als Mach-Zehnder-Interferometer,

Figur 3a-d        eine schematische Darstellung des Strahlengangs in einem erfindungsgemäßen Mikroskop aus verschiedenen Blickwin- keln,

Figur 4          eine schematische Darstellung des Messaufbaus eines erfindungsgemäßen Mik- roskops,

Figur 5a          eine schematische Darstellung des Messaufbaus mit einem HeNe-Laser,

Figur 5b          eine schematische Darstellung des Messaufbaus mit einem YAG-Laser und

Figur 6          eine zweidimensionale Anordnung eines Speckle-Musters auf einem Schirm,

Figur 7          das Prinzip der Deformation mittels Speckle-Interferometrie,

Figur 8          die Verformung eines Eiweißstranges,

Figur 9a und 9b   die Deformation eines Mikrosystems (Beschleunigungssensor),

Figur 10a         einen Drucksensor,

Figur 10b         die Deformation des Drucksensors und

Figur 10c         die Deformation des Drucksensors als Streifenmuster.

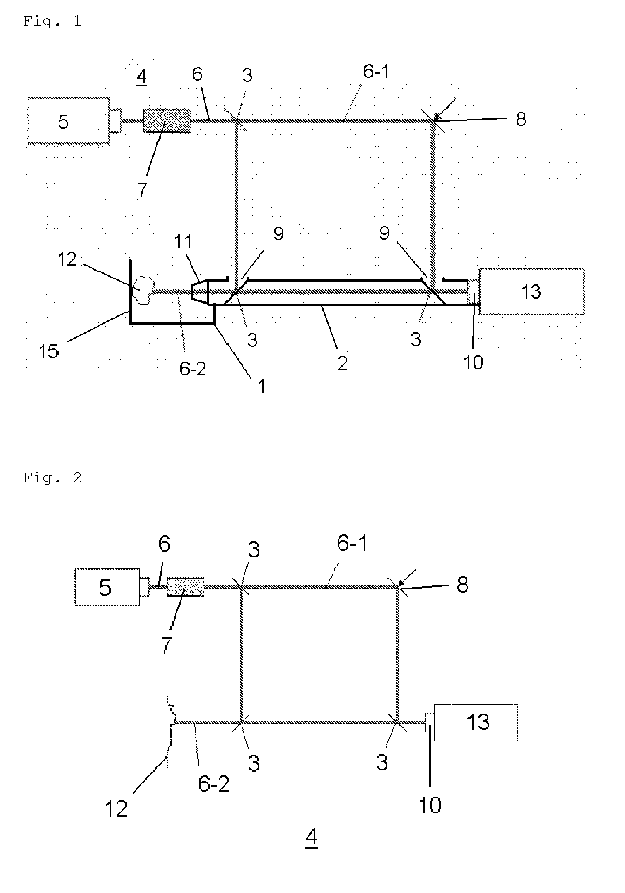

Die Figur 1 zeigt eine schematische Darstellung des Aufbaus des erfindungsgemäßen Mikroskops 1 mit einem Tubus 2, bei dem zwei Strahlenteiler 3 eines Speckle-Interferometers 4 in den Tubus 2 des Mikroskops 1 integriert sind.

Wie in Figur 1 dargestellt, sendet ein Laser 5 einen Laserstrahl 6 aus, der durch einen optoakustischen Modulator 7 auf einen Strahlenteiler 3 trifft und dort in einen Referenzstrahl 6-1 und einen Objektstrahl 6-2 aufgeteilt wird. Der Referenzstrahl 6-1 wird durch einen Piezospiegel 8 in den Tubus 2 des Mikroskops 1 gespiegelt. Hierzu weist der Tubus 2 eine Öffnung 9 auf. Im Tubus 2 trifft der Referenzstrahl 6-1 auf einen Strahlenteiler 3 und wird von dort in Richtung eines lichtempfindlichen Sensors 10 umgelenkt.

Der Objektstrahl 6-1 wird durch eine weitere Öffnung 9 in den Tubus 2 des Mikroskops 1 geleitet und durch einen zweiten Strahlenteiler 3 durch das Objektiv 11 des Mikroskops 1 auf das Objekt 12 gelenkt. Von dem Objekt 12 wird der Objektstrahl 6-2 durch beide Strahlenteiler 3 in Richtung des lichtempfindlichen Sensors 10 reflektiert.

Zur Auswertung der Messung werden die Aufnahmedaten des lichtempfindlichen Sensors 10 an eine Auswertungseinheit 13 weitergeleitet.

Die Figur 2 zeigt eine schematische Darstellung des Messaufbaus einer ESPI-Anlage (ESPI: Electronic Speckle Pattern Interferometry, elektronische Speckle-Interferometrie), also eines Speckle-Interferometers 4 mit Laser 5, Laserstrahl 6 (durchgezogene Linie), optoakustischem Modulator 7, lichtempfindlichem Sensor 10, Strahlenteiler 3 (halbdurchlässiger Spiegel) und Piezospiegel 8.

Der Laserstrahl 6 wird am Strahlenteiler 3 in einen Referenzstrahl 6-1 und einen Objektstrahl 6-2 aufgeteilt. Mit dem Objektstrahl 6-2 wird das zu untersuchende Objekt (die Probe) 12 beleuchtet.

Der vom Objekt 12 reflektierte Objektstrahl (das Objektlicht) 6-2 und der Referenzstrahl 6-1 werden mittels eines Strahlenteilers 3 überlagert.

Alternativ kann in einem makroskopischen Aufbau der Referenzstrahl 6-1 durch ein Glasfaserkabel geleitet werden. Hierzu würde hinter dem Piezospiegel 8 eine Fasereinkopplung angeordnet sein und der Strahlenteiler 3, der in der Figur 2 vor dem lichtempfindlichen Sensor 10 angeordnet ist würde entfallen.

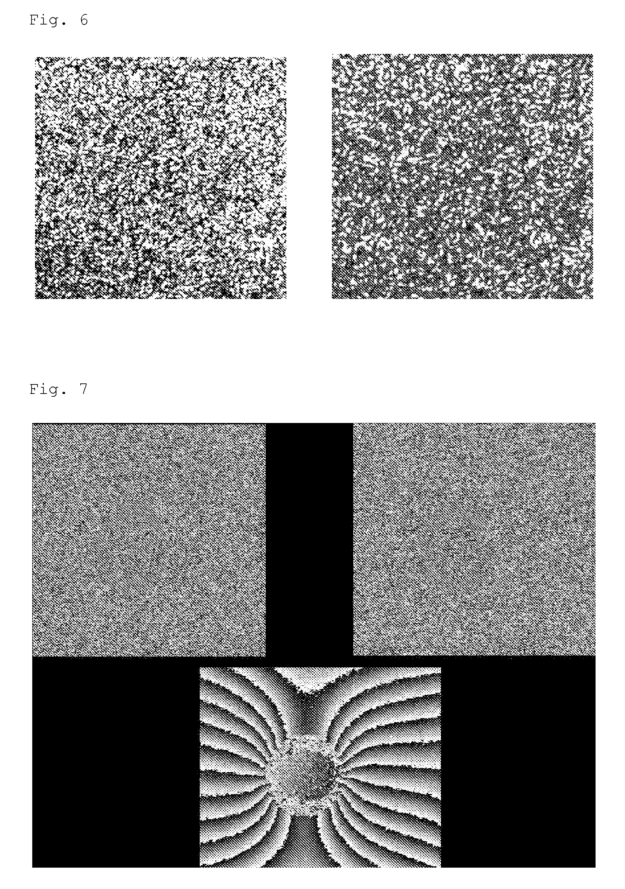

Der lichtempfindliche Sensor 10 nimmt nun ein Bild auf. Verändert sich das Objekt 12, zum Beispiel durch eine Deformation, so wird eine zweite Aufnahme gemacht. Die beiden Bilder werden unter Verwendung einer geeigneten Software (siehe oben) voneinander subtrahiert und es entsteht ein Streifenbild wie in Figur 7 (unten) dargestellt.

In den Figuren 1 und 2 wird der Strahlengang eines Mach-Zehnder-Interferometers dargestellt. Alternativ kann der Strahlengang im erfindungsgemäßen Mikroskop auch als Michelson-Interferometer oder als Shearing-Interferometer realisiert werden. Das Shearing-Interferometer ist eine Sonderform des Michelson-Interferometers.

Bei diesen Interferometern handelt es sich um Out-of-plane-Interferometer.

Reine out-of-plane empfindliche Interferometer haben einen Empfindlichkeitsvektor orthogonal zur Oberfläche. Mit diesen Interferometern können also Deformationen orthogonal zur Oberfläche gemessen sowie das Höhenprofil der Oberfläche erfasst werden.

Die Shearing-Interferometer erfassen die Ableitung der Oberfläche, was nach einer Integration auf die Deformation oder Form der Oberfläche schließen lässt.

Man kann aber auch ein In-plane-Interferometer in das Mikroskop integrieren.

Der Empfindlichkeitsvektor von in-plane empfindlichen Interferometern ist parallel zur Oberfläche. Somit ist beispielsweise die Messung von Dehnungen möglich.

Bei in-plane-Interferometern treffen sowohl der Objektstrahl 6-2 als auch der Referenzstrahl 6-1 auf das Objekt 12. Einer der Strahlen wird jedoch durch Spiegel phasenverschoben. Dieser Strahl ist im Sinne der Erfindung der Referenzstrahl 6-1.

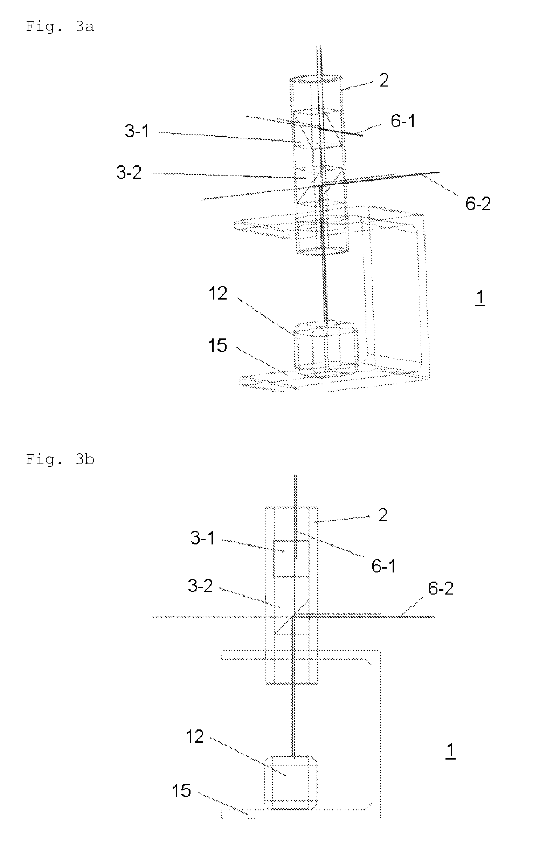

Die Figuren 3a-3d zeigen schematische Darstellungen des Strahlenganges im Tubus 2 eines erfindungsgemäßen Mikroskops 1 aus verschiedenen Blickwinkeln.

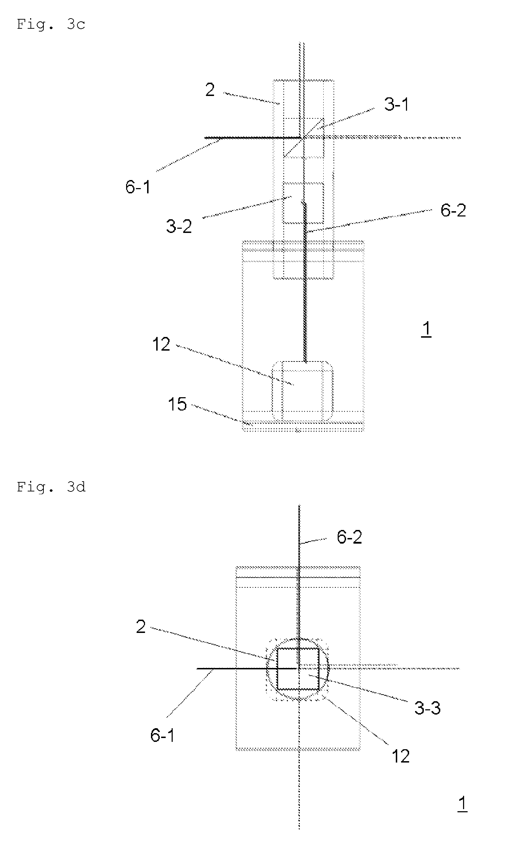

Die Figur 3a zeigt eine dreidimensionale Ansicht des Strahlengangs im Tubus 2 aus einem Blickwinkel von vorne rechts, die Figur 3b aus einem Blickwinkel von der rechten Seite, die Figur 3c von vorne und die Figur 3d von oben.

Der Referenzstrahl 6-1 wird seitlich in den Tubus 2 eingeleitet und trifft auf einen ersten Strahlenteilerwürfel 3-1. An dem ersten Strahlenteilerwürfel 3-1 wird der Referenzstrahl 6-1 in Richtung des Okulars bzw. des lichtempfindlichen Sensors 10 umgeleitet.

Der Objektstrahl 6-2 tritt seitlich in den Tubus 2 ein und trifft auf einen zweiten Strahlenteilerwürfel 3-2. An dem zweiten Strahlteilerwürfel 3-2 wird der Objektstrahl 6-2 in Richtung auf das Objekt 12 umgeleitet. Vom Objekt 12 wird der Objektstrahl 6-2 durch die beiden Strahlenteilerwürfel 3-3 hindurch zum Okular reflektiert.

Anstatt von Strahlenteilerwürfeln 3-3 können auch halbdurchlässige Spiegel oder Prismen verwendet werden. Denkbar ist auch, dass die Eintrittsposition des Referenzstrahls 6-1 und die des Objektstrahls 6-2 vertauscht werden, so dass der Referenzstrahl 6-1 auf den zweiten Strahlenteilerwürfel 3-2 und der Objektstrahl 6-2 auf den ersten Strahlenteilerwürfel 3-1 trifft.

Anwendungsbeispiele des erfindungsgemäßen Mikroskops

Mikrosysteme und Mikroelektronikbauteile

Die nachfolgenden Beschreibungen gelten für Anwendungen in der Forschung und Entwicklung, für Anwendungen in der Produktion und der Qualitätskontrolle (Sicherstellung von Eigenschaften und Funktionen), jeweils für kleine und kleinste Bauteile. Statische und dynamische Verformungen können dabei durch den Betrieb oder durch Fremdeinwirkung von außen induziert werden.

Raue mikrostrukturierte Bauteile:
Da das erfindungsgemäße Mikroskop 1 bis an die Grenze der optischen Auflösung arbeiten kann, sind relativ hoch aufgelöste Deformationsmessungen bis in den sub-Mikrometerbereich möglich. Kleine und kleinste Bauteile können damit einer statischen und/oder einer dynamischen Verformungsmessung zugeführt werden.

Glatte mikrostrukturierte Bauteile:
Lange galt es als unmöglich, die Speckle-Interferometrie auf Mikrosysteme anzuwenden, weil diese eine ungewöhnlich glatte Oberfläche haben und damit keine Rauhigkeit aufweisen, die zu einem Speckle-Muster führen könnte. Bei makroskopischen Proben behilft man sich in solchen Fällen, indem man die zu untersuchende Probe mit einer weißen Emulsion beaufschlagt, die für eine stark reflektierende Oberfläche sorgt, die gleichzeitig matt ist und eine regelmäßige Rauhigkeit aufweist. Im Falle von Mikrosystemen sind die einzelnen Pulverbestandteile der Emulsion allerdings oft in einer Größenordnung, die im Bereich von Strukturdetails der Mikrosysteme selbst liegt und daher einen Einsatz dieser Emulsion bei Mikrosystemen nicht erlauben.

Abhilfe schafft hier der Einsatz des erfindungsgemäßen Mikroskops 1. Mit dem Mikroskop 1 können Mikrosysteme mit glatten Oberflächen ohne weitere Manipulation oder Oberflächenveränderung direkt im Anschluss an die Fertigung untersucht werden.

Mikrowerkstoffprüfung

Da man das erfindungsgemäße Mikroskop 1 bis an die Grenze der optischen Auflösung einsetzten kann, sind relativ hoch auflösende Deformationsmessungen möglich. Kleine und kleinste Objekte 12 können damit einer Werkstoffprüfung zugeführt werden. Die Verformung an Rissspitzen in Materialien und die Ausbreitung von Rissspitzen können hochaufgelöst dargestellt werden und die plastischelastischen Wechselwirkungen an der Rissspitze untersucht werden.

In situ Diagnostik bei Ätz- und Beschichtungsprozessen Bei der Bearbeitung von dünnen Schichten für die Mikroelektronik, Mikrosystemtechnik und verwandte Arbeitsgebiete kann das erfindungsgemäße Mikroskop 1 Dickenänderungen im Nanometerbereich nachweisen, mit lateraler Auflösung im sub-Mikrometerbereich.

Zudem kann man Veränderungen auf einer Objektoberfläche teilweise bis in den atomaren Bereich beobachten.

In vitro Diagnostik im Bereich der Biowissenschaften Im Stand der Technik wird immer wieder zitiert, dass für das Auftreten von Speckles eine Mindestrauhigkeit in der Größenordnung der Wellenlänge des Lichtes erforderlich ist.

Mit dem erfindungsgemäßen Mikroskop 1 ist es möglich, auch glatte Objekte direkt nach der Fertigung mit einer Restrauhigkeit von einigen Nanometern zu untersuchen. Der Einsatz des erfindungsgemäßen Mikroskops 1 ist auch bei höchsten Vergrößerungen und bei völlig glatten Objekten möglich, also bei Objekten, die überhaupt keine Rauhigkeit im klassischen Sinne aufweisen. Dies ermöglicht eine Anwendung der ESPI-Technologie auf mikroskopisch kleine Objekte aus dem Bereich der Biowissenschaften, wie zum Beispiel biologische Zellen, Zellkerne, Vesikeln, Proteine etc., die zum einen weder rau sind noch aufgeraut werden können und die darüber hinaus während der Untersuchung in flüssigem Medium verbleiben müssen, will man sie "in vivo", also unter biologischen Realbedingungen, beobachten.

Messaufbau:

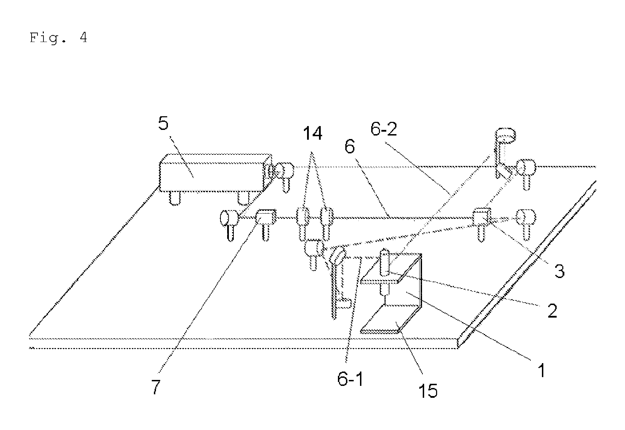

In Figur 4 ist ein einfacher Messaufbau eines erfindungsgemäßen Mikroskops 1 dargestellt. Ein Laser 5 strahlt einen Laserstrahl 6 durch ein Linsensystem 14, in dem auch ein optoakustischer Modulator 7 angeordnet ist, in Richtung auf einen Strahlenteiler 3. An dem Strahlenteiler 3 wird der Laserstrahl 6 (durchgezogene Linie) in einen Objektstrahl 6-2 (gepunktete Linie) und ein Referenzstrahl 6-1 (gestrichelte Linie) aufgeteilt und in den Tubus 2 geführt. Den Objektstrahl 6-2 koppelt man von hinten in den Tubus 2 des Mikroskops 1.

Der Objektstrahl 6-2 beleuchtet durch die Optik des Tubusses 2 hindurch das Objekt 12, das auf dem Mikroskoptisch 15 liegt. Dabei wird für den Objektstrahl 6-2 der Beleuchtungsweg gewählt, auf dem auch das Licht von einer normalen Weißlichtquelle laufen würde. Konstruktiv wurden am Tubus 2 des Mikroskops 1 jedoch einige bauliche Veränderungen vorgenommen, zum Beispiel ein Diffusor im Strahlengang entfernt, der die Messungen mit Laserlicht statt mit weißem Licht stört und zu einem sehr schlechten Speckle-Muster führt.

Alternativ kann der Objektstrahl 6-2 auch über einen anderen Lichtweg, beispielsweise von der Seite oder von einem beliebigen Winkel von der Seite, von halb schräg vorne, von halb schräg hinten usw., in den Strahlengang des Mikroskops 1 eingekoppelt werden. Die Beleuchtung des Objekts 12 erfolgt auch hier durch das optische System eines Lichtmikroskops (insbesondere: durch das Objektiv 11). In diesem Fall würde das weiße Licht zum Betrachten des Objekts 12 über den normalen Weg laufen und der Laser an einer beliebigen Stelle in den Tubus 2 eingekoppelt werden, um dann in den optischen Strahlengang zu kommen. Zudem ist es sinnvoll, den Weißlichtweg von Anfang an zu nutzen, aber man kann auch etwas später in den Strahlengang einkoppelt.

Wie in Figur 4 gezeigt, wird der Referenzstrahl 6-1 seitlich in den Tubus 2 eingeleitet. Hierzu besitzt der Tubus 2 eine seitliche Öffnung oder einen weiteren offenen Tubus 2. Der Beleuchtungsweg ist dabei so gewählt, dass das Licht des Referenzstrahls 6-1 von der Stelle aus, von wo es eingespiegelt wurde, nach oben in Richtung (Bin-)Okular bzw. lichtempfindlicher Sensor 10 läuft. Somit kann, wie in Figur 4 dargestellt, das überlagerte Licht von Objektstrahl 6-2 und Referenzstrahl 6-1 zum lichtempfindlichen Sensor 10 geführt werden. Mit dem erfindungsgemäßen Mikroskop 1 lässt sich die ESPI bei hohen und höchsten Vergrößerungen realisieren. Da man in einem Lichtmikroskop arbeit, gelten die Bedingungen der Abbe'schen Abbildung im Fernfeld (Formel I):

$$d_{\min} = \frac{\lambda}{2 \cdot NA} \quad (I)$$

(mit $\lambda$ = Wellenlänge, NA = numerische Apertur)

Die laterale Auflösung beträgt bis ca. $d_{\min} = \lambda/2$ wie im Lichtmikroskop, abhängig von der Qualität der Linsen. Beim grünen Nd:YAG-Laser (frequenzverdoppelt) also 532 nm/2 = ca. 270 nm, beim roten HeNe-Laser ca. 632 nm/2 = ca. 320 nm. Der Einsatz von UV-Licht würde eine laterale Auflösung von unter 200 nm ermöglichen. Davon zu unterscheiden ist die axiale Auflösung, also die Verformung in z-Richtung entlang der optischen Achse. Die axiale Auflösung ist geringer als die laterale Auflösung.

Verbesserter und komplexer Aufbau für den Betrieb mit mehreren Lasern verschiedener Wellenlänge und Leistung und für Dunkelfeld- statt Hellfeldbeleuchtung:

Für Formvermessungen mit der Zweiwellenlängentechnik ist die Verwendung von zwei Lasern mit verschiedenen Wellenlängen notwendig. Außerdem ist ein HeNe-Laser 5-1 zumindest bei hohen Vergrößerungen nicht geeignet für Messungen, die man im Dunkelfeld durchführt, da die Leistung zu gering ist. Durch die Verwendung eines weiteren Lasers 5-2, z.B. eines frequenzverdoppelten 100 mW Nd:YAG-Lasers 5-2 kann das Objekt 12 mit stark erhöhter Intensität sowie mit einer weiteren Wellenlänge beleuchtet werden. Dabei ist es experimentell günstig, während der Versuchsreihen oft und schnell zwischen dem (roten) HeNe-Laser 5-1 und dem (grünen) YAG-Laser 5-2 wechseln zu können.

Außerdem ist es bei der Dunkelfeldmessung notwendig, den Objektstrahl 6-2 idealerweise von vorn in den Tubus 2 einzustrahlen. Dies ist erforderlich, weil der Laserstrahl 6 aus Gründen der Beleuchtung und Homogenität aufgeweitet werden muss. Diese Strahlaufweitung ist deshalb idealerweise von vorne realisierbar, da im "normalen" Strahlengang eines Mikroskops (entspricht Beleuchtung von hinten) bereits einige Linsen eingebaut sind. Somit ist im Fall der Dunkelfeldbeleuchtung eine Einkopplung des Objektstrahls 6-2 von hinten über den normalen optischen Beleuchtungsweg zunächst nicht möglich. Es ist ebenfalls denkbar, den Objektstrahl 6-2 von der Seite oder von einem beliebigen Winkel von der Seite (von halb schräg vorne, von halb schräg hinten usw.) einzukoppeln.

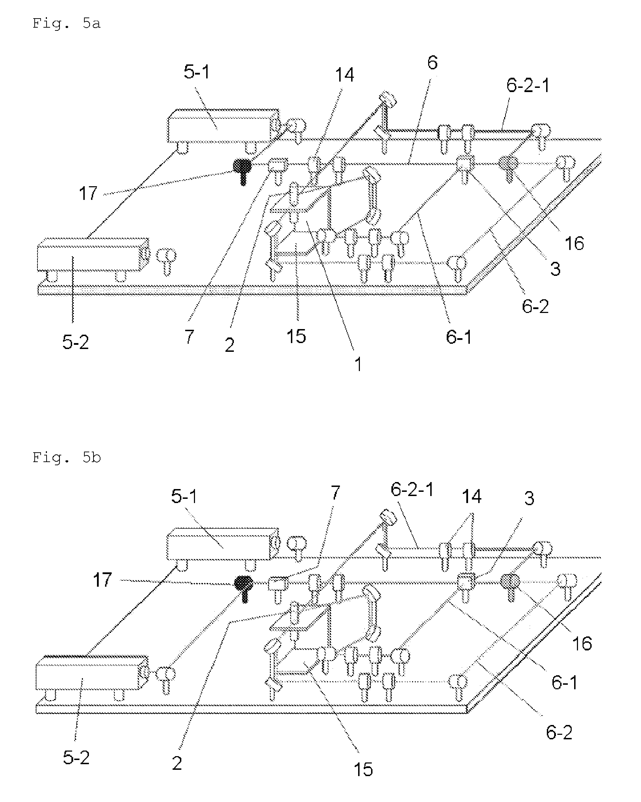

Die Figuren 5a und 5b zeigen einen schematischen Messaufbau für Hell- und Dunkelfeldbeleuchtung sowie der Strahlaufweitung.

In Figur 5a wird der Betrieb mit einem HeNe-Laser 5-1 (mit rotem Licht) und in Figur 5b der Betrieb mit einem YAG-Laser 5-2 (mit grünem Licht) gezeigt.

Das Linsensystem 14 in den Strahlengängen in den Figuren 5a und 5b dienen zur Aufweitung des Laserstrahls 6. Der Strahlengang des Referenzstrahls 6-1 (durchgezogene Linie) ist in beiden Aufbauten derselbe. Die gepunktete Linie zeigt in beiden Figuren (5a und 5b) den Objektstrahl 6-2 bei der Dunkelfeldbeleuchtung, er wird von vorn in den Tubus 2 eingestrahlt. Erst durch das Einsetzten eines ersten Spiegels 16 lenkt man den Objektstrahl 6-2 zur Hellfeldbeleuchtung von hinten um (Objektstrahl 6-2-1 bei der Hellfeldbeleuchtung). Der zweite Spiegel 17 muss um 90° gedreht werden, um zwischen den beiden Lasern 5-1 und 5-2 zu wechseln.

In Figur 5a ist ein roter HeNe-Laser 5-1 und in Figur 5b ein grüner Nd:YAG-Laser 5-2 dargestellt. Das erfindungsgemäße Mikroskop 1 lässt sich jedoch um weitere Laserarten, -typen, -farben und -leistungen erweitern.

Die Figur 6 zeigt eine zweidimensionale Anordnung von Speckles auf einem Schirm, einer Fotoplatte oder einem CCD (links) und eine Falschfarbdarstellung zur Dokumentation der verschiedenen Intensitäten und Grauwerte (rechts).

Die Figur 7 zeigt das Prinzip der Deformationsmessung mittels Speckle-Interferometrie (ESPI). Oben links ist das zweidimensionale Speckle-Muster einer Lochblende vor der Verformung und oben rechts das nach der Verformung dargestellt. Nachdem man die beiden obigen Bilder voneinander abgezogen hat, erhält man das unten dargestellte Ergebnisbild.

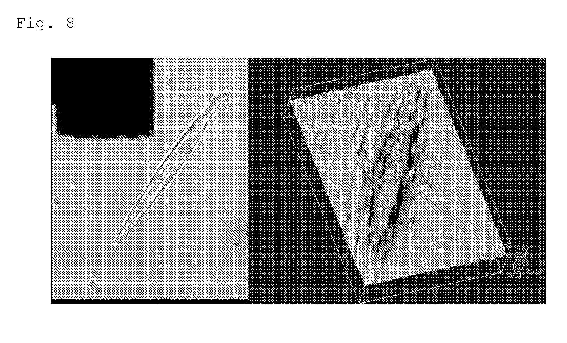

Die Figur 8 zeigt eine Abbildung eines Forisoms (chemomechanisches Proteinaggregat) mit einer Länge von 30 μm und einer Breite von 5 μm (links) und eine dreidimensionale Ansicht nach der Verformung (rechts), gemessen unter Verwendung des erfindungsgemäßen Mikroskops 1. Selbst die Verformung einzelner Eiweißstränge entlang des Objekts 12 können durch das erfindungsgemäße Verfahren gemessen werden.

Im Bereich der Biowissenschaften kann mit dem erfindungsgemäßen Mikroskop 1 die Verformung von kleinen Bausteinen oder kleinsten Einheiten in Mikrometerdimensionen sowohl statisch, als auch dynamisch nachgewiesen werden (siehe Figur 8). Bei Vitalitätstests an Zellen können kleine Bausteine oder kleinste Einheiten wie zum Beispiel Mitochondrien, Golgi-Apparat (mit Untereinheiten), Cytoskelett, Membranen, Vesikel, Pili, usw. gemessen werden. Dabei zeigen entweder die ganze Zelle oder einzelne Untereinheiten der Zelle beim Absterben Veränderungen in der Schwingung.

Dies eröffnet die Möglichkeit, Vitalitätstest einzelner Zellen zu etablieren, zum Beispiel bei zeitgesteuerten Versuchen, als Funktion der Umweltparameter oder vor und nach einer Medikamentengabe. Pharmazeutische Tests sind auf die Ebene einzelner Zellen herunterskalierbar. Außerdem lassen sich Statistiken zur Zellreaktion auf äußere Einflüsse und Zellvitalität weitaus genauer als bisher durchführen.

Krebsdiagnostik und Krebstherapie

Mit dem erfindungsgemäßen Mikroskop 1 wird ein neuer Zweig der Krebsdiagnostik und Krebstherapie eröffnet. Die Bestimmung von "Eigenschwingfrequenzen" von malignen und gesunden Zellen oder Zellbestandteilen erlaubt die anschließende Beschallung und/oder Bestrahlung eines Zellverbundes in Frequenzbereichen, die nur für maligne Zellen tödlich sind, während gesunde Zellen nicht geschädigt werden (physikalische Therapie statt Chemotherapie oder ergänzende physikalische Therapie).

Es ist denkbar, einen Ultraschallkopf zu entwikkeln, der stufenlos verschiedene Frequenzen und stufenlos verschiedene Leistungen von Schall- und Ultraschallwellen in ein biologisches Gewebe einbringen kann.

Diese Krebstherapie ist zu unterscheiden von verschiedenen Formen der Hyperthermie, die Ultraschall einsetzen, um biologisches Gewebe lokal zu erhitzen (faktisch: lokales kurzzeitiges Fieber) und dadurch Krebszellen abtöten. Bei dem hier vorgestellten Ansatz geht es darum, für Krebszellen individuell vorliegende Schwingvorgänge der gesamten Zelle, des Zellkerns oder von Zellkomponenten zu identifizieren und mittels der Induzierung dieser individuellen Schwingvorgänge die Krebszellen individuell zu töten, während die gesunden Zellen nicht geschädigt werden.

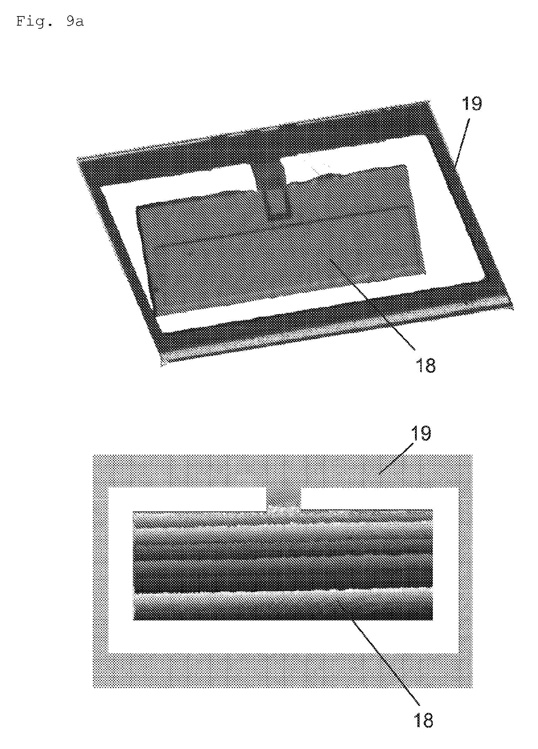

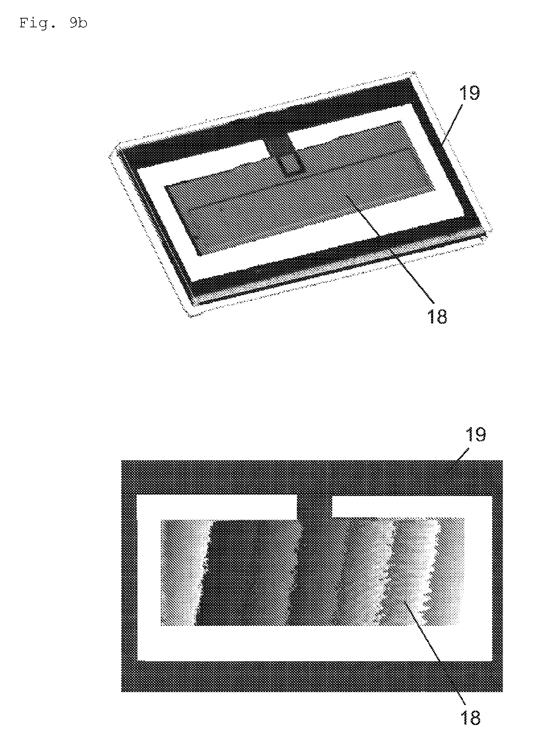

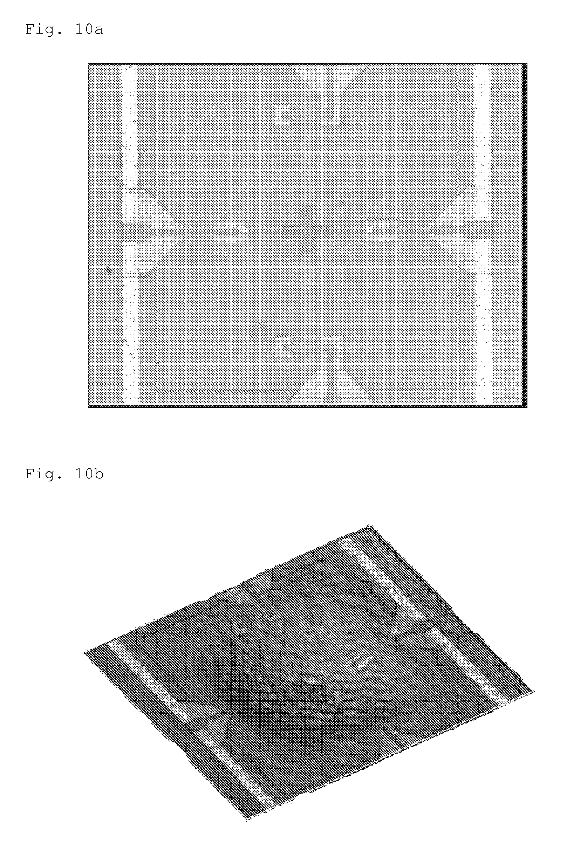

Die Figuren 9a, 9b, 10a-10c zeigen die Deformation von Mikrosystemen, die mit dem erfindungsgemäßen Mikroskop 1 gemessen wurden.

Die Figur 9a zeigt einen Bescheunigungssensors 18 (zentrales Modul nur 500 μm x 200 μm). Die obere Darstellung zeigt die Deformation des dynamischen Schwingens (oben) und das dazugehörige ESPI-Ergebnisbild (unten). Der Bescheunigungssensor 18 schwingt dabei senkrecht zum Rahmen 19.

Die Figur 9b zeigt denselben Bescheunigungssensor 18 wie in Figur 9a. Die obere Darstellung zeigt die Deformation des Beschleunigungssensors 18 während einer dynamischen Schwingung (oben) und das dazugehörige ESPI-Ergebnisbild (unten). Im Gegensatz zu der in Figur 9a gezeigten Schwingung taumelt der Bewegungssensor 18 um seine Befestigungsachse.

Die Figuren 10a-10c zeigen einen Drucksensor (Größe der Membran: 1 mm x 1 mm, maximale Verformung der Membranmitte ca. 700 nm). Mit dem erfindungsgemäßen Mikroskop 1 wird die Deformation über die gesamte Sensormembran lateral hoch aufgelöst, so dass z.B. auch die Verformung an den Orten der Piezowiderstände (kleine Details an den vier Seiten, ungefähr 20 μm Breit) zu sehen ist und quantitativ bestimmt werden kann.

Die Figur 10a zeigt ein optisches Bild der Membran des Druckmessers mit vier Sensorelementen an jeder Seite.

Die Figur 10b zeigt die Verformung der Membran bei einem Unterdruck (Verformung: ca. 700 nm).

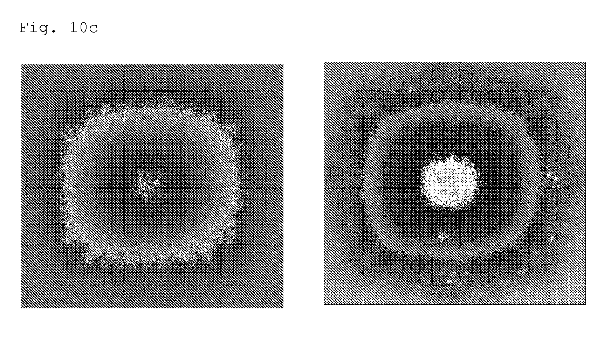

Die Figur 10c zeigt die Streifenmuster der Verformung der Membran des Drucksensors bei einem kleinen Unterdruck (linke Seite, Verformung: ca. 300 nm) und bei einem größeren Unterdruck (rechte Seite, Verformung: ca. 700 nm).

Bezugszeichenliste:

| 1 | Mikroskop |
|---|---|
| 2 | Tubus |
| 3 | Strahlenteiler |
| 3-1 | erster Strahlenteilerwürfel |
| 3-2 | zweiter Strahlenteilerwürfel |
| 3-3 | Strahlenteilerwürfel |
| 4 | Speckle-Interferometer |
| 5 | Laser |
| 5-1 | HeNe-Laser |
| 5-2 | Nd:YAG-Laser |
| 6 | Laserstrahl |
| 6-1 | Referenzstrahl |
| 6-2 | Objektstrahl |
| 6-2-1 | Objektstrahl bei der Hellfeldbeleuchtung |
| 7 | optoakustischer Modulator |
| 8 | Piezospiegel |
| 9 | Öffnung |
| 10 | lichtempfindlicher Sensor |
| 11 | Objektiv |
| 12 | Objekt |
| 13 | Auswertungseinheit |
| 14 | Linsensystem |
| 15 | Mikroskoptisch |
| 16 | erster Spiegel |
| 17 | zweiter Spiegel |
| 18 | Beschleunigungssensor |
| 19 | Rahmen |

**Patentansprüche**

1. Mikroskop (1) mit einem Tubus (2), **dadurch gekennzeichnet, dass** mindestens ein Bauteil eines Speckle-Interfereometers (4) teilweise oder vollständig in den Tubus (2) integriert ist, wodurch der Referenzstrahl (6-1) und der Objektstrahl (6-2) des Speckle-Interferometers (4) durch die Optik des Mikroskops (1) leitbar sind.

2. Mikroskop (1), nach Anspruch 1 **dadurch gekennzeichnet, dass** das Speckle-Interferometer (4) aus einem oder mehreren Lasern (5), einem oder mehreren Strahlenteilern (3), einem Piezospiegel (8) und einem lichtempfindlichen Sensor (10) oder einer Projektionsfläche besteht.

3. Mikroskop (1) nach Anspruch 1 oder 2, **dadurch gekennzeichnet, dass** der Tubus (2) an seinem unteren Ende ein Objektiv (11) und an seinem oberen Ende ein Okular oder den lichtempfindlichen Sensor (10) aufweist.

4. Mikroskop (1) nach einem der Ansprüche 1 bis 3, **dadurch gekennzeichnet, dass** der lichtempfindliche Sensor (10) in einer digitalen Kamera integriert ist.

5. Mikroskop (1) nach einem der Ansprüche 1 bis 4, **dadurch gekennzeichnet, dass** der lichtempfindliche Sensor (10) mit einer Auswertungseinheit (13) verbunden ist.

6. Mikroskop (1) nach einem der Ansprüche 1 bis 5, **dadurch gekennzeichnet, dass** in dem Tubus (2) ein oder zwei Strahlenteiler (3) angeordnet sind.

7. Mikroskop (1) nach einem der Ansprüche 1 bis 6, **dadurch gekennzeichnet, dass** der Tubus (2) zwischen Okular und Objektiv (11) mindestens eine Öffnung (9) zur Aufnahme des Referenzstrahls (6-1) und des Objektstrahls (6-2) aufweist.

8. Mikroskop (1) nach einem der Ansprüche 1 bis 7, **dadurch gekennzeichnet, dass** der Tubus (2) zwischen Okular und Objektiv (11) mindestens eine Öffnung (9) zur Aufnahme des Objektstrahls (6-2) aufweist und der Referenzstrahl (6-1) über eine Glasfaser zum lichtempfindlichen Sensor (10) leitbar ist.

9. Mikroskop (1) nach einem der Ansprüche 1 bis 8, **dadurch gekennzeichnet, dass** bei einer Verwendung von UV- und/oder IR-Lasern die optischen Linsen in dem Mikroskop (1) aus einem Material bestehen, das ausgewählt ist aus der Gruppe bestehend aus Quarzglas, kristallinem Magnesiumfluorid, Calciumfluorid, Kaliumbromid, Siliziumverbindungen, Germaniumverbindungen, Zinkselenid, Kalknatronglas, Borsilikatglas, Magnesiumoxid, Calciumoxid, Strontiumoxid, Bariumoxid, kristalline Spinelle, YAG, Silikatmineralien, CVD-Diamant, AMTIR.

10. Mikroskop (1) nach einem der Ansprüche 1 bis 9, **dadurch gekennzeichnet, dass** der Strahlengang des Speckle-Interferometers (4) mittels Spiegeln (16, 17) derart umleitbar ist, dass mindestens ein weiterer Laser (5) als Strahlenquelle verwendbar ist.

11. Verfahren zur Bewegungsmessung, Formmessung und/oder Deformationsmessung von Objekten (12), für Vitalitätstests von Zellen oder zur Krebsdiagnostik mittels eines Mikroskops (1) nach einem der vorhergehenden Ansprüche, **dadurch gekennzeichnet, dass** man mittels eines Lasers (5) einen Laserstrahl (6) erzeugt, den ein Strahlenteiler (3) in einen Referenzstrahl (6-1) und einen Objektstrahl (6-2) aufteilt,
wobei der Objektstrahl (6-2) durch die Optik des Mikroskops (1) ein zu untersuchendes Objekt (12) beleuchtet und
man den Referenzstrahl (6-1) in den Tubus (2) des Mikroskops (1) einspiegelt und von dort in Richtung eines lichtempfindlichen Sensors (10) leitet oder durch eine Glasfaser direkt zum lichtempfindlichen Sensor (10) leitet,
wobei sich Objektstrahl (6-2) und Referenzstrahl (6-1) auf dem Weg in Richtung des oberen Endes des Tubusses (2) oder danach überlagern und auf den lichtempfindlichen Sensor (10) treffen.

12. Verfahren nach Anspruch 11, **dadurch gekennzeichnet, dass** man mittels des lichtempfindlichen Sensors (10) mehrere Aufnahmen des Speckle-Musters des Objekts (12) erzeugt.

13. Verfahren nach Anspruch 12, **dadurch gekennzeichnet, dass** man die Daten der Aufnahmen an eine Auswertungseinheit (13) weiterleitet, wobei man die Daten in der Auswertungseinheit (13) speichert und mittels einer Software auswertet.

14. Verfahren nach einem der Ansprüche 11 bis 13, **dadurch gekennzeichnet, dass** man durch Veränderung der Position von einem oder mehreren Spiegeln (17) im Strahlengang den Laser (5), der den Laserstrahl (6) erzeugt, wechselt, oder
dass man durch Veränderung der Position von einem oder mehreren Spiegeln (16) im Strahlengang von einer Hellfeldbeleuchtung zu einer Dunkelfeldbeleuchtung umschaltet.

15. Verwendung eines Mikroskops (1) nach einem der Ansprüche 1 bis 10 zur Werkstoffprüfung, Schichtdickenmessung, Bewegungsmessung, Formmessung und/oder Deformationsmessung von Objekten (12), für Vitalitätstests von Zellen oder zur Krebsdiagnostik.

Fig. 1

Fig. 2

Fig. 3a

Fig. 3b

Fig. 3c

Fig. 3d

Fig. 4

Fig. 5a

Fig. 5b

Fig. 6

Fig. 7

Fig. 8

Fig. 9a

Fig. 9b

Fig. 10a

Fig. 10b

Fig. 10c

Europäisches Patentamt

European Patent Office

Office européen des brevets

## EUROPÄISCHER RECHERCHENBERICHT

**Nummer der Anmeldung**

EP 08 17 1002

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | ASWENDT P ET AL: "Testing microcomponents by speckle interferometry" PROCEEDINGS OF THE SPIE - THE INTERNATIONAL SOCIETY FOR OPTICAL ENGINEERING SPIE-INT. SOC. OPT. ENG USA, Bd. 3825, 1999, Seiten 165-173, XP002520980 ISSN: 0277-786X | 1-8 | INV. G02B21/00 G01B9/02 G01B11/16 |
| Y | * Seite 167, Absatz 4 - Seite 168, letzter Absatz * * Abbildung 5 * ----- | 11-15 | |
| X | JARAD A E ET AL: "Microscopic ESPI: better fringe qualities by the Fourier transform method" PROCEEDINGS OF THE SPIE - THE INTERNATIONAL SOCIETY FOR OPTICAL ENGINEERING SPIE-INT. SOC. OPT. ENG USA, Bd. 4933, 2003, Seiten 335-341, XP002521033 ISSN: 0277-786X * Seite 338 * * Abbildungen 3,4 * ----- | 1-8, 11-13,15 | |
| Y | ALAIN BOSSEBOEUF ET AL: "Characterization of the static and dynamic behaviour of M(O)EMS by optical techniques: status and trends; Characterization of M(O)EMS by optical techniques" JOURNAL OF MICROMECHANICS & MICROENGINEERING, INSTITUTE OF PHYSICS PUBLISHING, BRISTOL, GB, Bd. 13, Nr. 4, 1. Juli 2003 (2003-07-01), Seiten S23-S33, XP020068933 ISSN: 0960-1317 * Seite S26, rechte Spalte, letzter Absatz - Seite S27, rechte Spalte, Absatz 1 * ----- -/-- | 11-15 | RECHERCHIERTE SACHGEBIETE (IPC) G01B G02B |

~~Der vorliegende Recherchenbericht wurde für alle Patentan~~sprüche erstellt

| Recherchenort | Abschlußdatum der Recherche | Prüfer |
|---|---|---|
| München | 25. März 2009 | von Hentig, Roger |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
....................................................
& : Mitglied der gleichen Patentfamilie, übereinstimmendes Dokument

EPO FORM 1503 03.82 (P04C03)

**EUROPÄISCHER RECHERCHENBERICHT**

Nummer der Anmeldung

EP 08 17 1002

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 20 2004 008586 U1 (VOESSING FRANK [DE]; SCHUTH BETTINA [DE]) 23. September 2004 (2004-09-23) * Absatz [0016] - Absatz [0023] * * Abbildungen 1,2 * | 1,3-8, 11-13,15 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 25. März 2009 | von Hentig, Roger |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...................................................................
& : Mitglied der gleichen Patentfamilie, übereinstimmendes Dokument

EPO FORM 1503 03.82 (P04C03)

Europäisches
Patentamt

European
Patent Office

Office européen
des brevets

**CORRECTED VERSION**

**Nummer der Anmeldung**

**EP 08 17 1002**

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

1-8, 11-15

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt
European
Patent Office
Office européen
des brevets

**MANGELNDE EINHEITLICHKEIT**
**DER ERFINDUNG**
**ERGÄNZUNGSBLATT B**

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1 - 8, 11 - 15

   beziehen sich auf ein Mikroskop zur Speckle-Interferometrie für die Messung von kleinen Objekten oder Objekten mit glatter Oberfläche.
   ---

2. Anspruch: 9

   bezieht sich auf des Material optischer Linsen in einem Mikroskop, wobei diese aus einem Material bestehen, das ausgewählt ist aus der Gruppe bestehend aus Quarzglas, kristallinem Magnesiumfluorid, Calciumfluorid, Kaliumbromid, Siliziumverbindungen, Germaniumverbindungen, Zinkselenid, Kalknatronglas, Borsilikatglas, Magnesiumoxid, Calciumoxid, Strontiumoxid, Bariumoxid, kristalline Spinelle, YAG, Silikatmineralien,CVD-Diamant, AMTIR.
   ---

3. Anspruch: 10

   bezieht sich auf ein Mikroskop mit Spiegeln und einem weiteren Laser.
   ---

**ANHANG ZUM EUROPÄISCHEN RECHERCHENBERICHT
ÜBER DIE EUROPÄISCHE PATENTANMELDUNG NR.**

EP 08 17 1002

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-03-2009

| Im Recherchenbericht angeführtes Patentdokument | Datum der Veröffentlichung | Mitglied(er) der Patentfamilie | Datum der Veröffentlichung |
|---|---|---|---|
| DE 202004008586 U1 | 23-09-2004 | KEINE | |

Für nähere Einzelheiten zu diesem Anhang : siehe Amtsblatt des Europäischen Patentamts, Nr.12/82

EPO FORM P0461